(19) Europäisches Patentamt
European Patent Office
Office européen des brevets

(11) **EP 3 237 882 B1**

(12) **FASCICULE DE BREVET EUROPEEN**

(45) Date de publication et mention
de la délivrance du brevet:
**29.04.2020 Bulletin 2020/18**

(21) Numéro de dépôt: **15810785.4**

(22) Date de dépôt: **18.12.2015**

(51) Int Cl.:
*G01N 15/08* *(2006.01)*    *G01N 29/02* *(2006.01)*
*B29C 70/54* *(2006.01)*    *B29C 70/48* *(2006.01)*
*G01N 29/07* *(2006.01)*    *G01N 29/11* *(2006.01)*
*G01N 29/22* *(2006.01)*    *G01N 29/46* *(2006.01)*

(86) Numéro de dépôt international:
**PCT/EP2015/080606**

(87) Numéro de publication internationale:
**WO 2016/102387 (30.06.2016 Gazette 2016/26)**

(54) **DISPOSITIF ULTRASONORE DE QUANTIFICATION DU FLUX D'ARRIVÉE/SORTIE DE RÉSINE D'INJECTION ET PROCÉDÉ METTANT EN OUVRE UN TEL DISPOSITIF**

ULTRASCHALLVORRICHTUNG ZUR QUANTIFIZIERUNG DER EINFLUSSES/AUSFLUSSES VON INJEKTIONSHARZ UND VERFAHREN ZUR IMPLEMENTIERUNG SOLCH EINER VORRICHTUNG

ULTRASONIC DEVICE FOR QUANTIFYING THE INFLOW/OUTFLOW OF INJECTION RESIN AND METHOD IMPLEMENTING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2014 FR 1463321**

(43) Date de publication de la demande:
**01.11.2017 Bulletin 2017/44**

(73) Titulaire: **AIRBUS (SAS)**
**31700 Blagnac (FR)**

(72) Inventeur: **AUFFRAY, Stéphane**
**44410 Saint Lyphard (FR)**

(74) Mandataire: **Gicquel, Olivier Yves Gérard et al**
**Airbus Opérations (S.A.S)**
**XIF - M0101/1**
**316, route de Bayonne**
**31060 Toulouse Cedex (FR)**

(56) Documents cités:
**FR-A1- 2 771 960**    **FR-A1- 2 995 556**
**US-A1- 2002 155 186**    **US-A1- 2007 145 622**

## Description

### *DOMAINE DE L'INVENTION*

L'invention se rapporte au domaine général de la fabrication de structures en matériau composite par imprégnation de résine dans des préformes fibreuses, selon des procédés LRI (i.e. "Liquid Resin Infusion" selon la dénomination anglo-saxonne) ou RTM (i.e. "Resin Transfert Molding") notamment. Elle concerne plus particulièrement le contrôle de la bonne imprégnation de la préforme par la résine.

### *CONTEXTE DE L'INVENTION - ART ANTERIEUR*

L'invention relève du domaine de la caractérisation de l'injection de préformes fibreuses par procédé LRI ou RTM.

Un exemple de système d'injection est connu du document us 2007/145622 A1.

Un système d'injection industriel peut se réduire à un piston et un moule. Ce dernier peut être de volume constant (RTM moule poinçon/matrice rigides) ou variable (RTM-VAP ou LRI moule poinçon rigide et membrane souple avec ou sans tôle de compensation (ou "caul plate" selon la dénomination anglo-saxonne)).

En ce qui concerne l'imprégnation de la préforme par la résine à l'intérieur du moule, le contrôle de la complétude de la phase d'imprégnation passe par une bonne maitrise de la quantité de résine imprégnant réellement la préforme fibreuse à un instant donné.

L'étude de l'écoulement du fluide d'imprégnation (résine) passe par détermination de la perméabilité du renfort constitutif de la structure composite.

Cette détermination est réalisée par l'injection à débit constant d'un liquide au travers d'un échantillon du renfort à caractériser, et la mesure de la différence de pression crée par cette injection, mesure qui est enregistrée. Dans cette opération, le renfort fibreux est progressivement saturé par le liquide au gré de l'avancement du front de résine.

Le modèle de base régissant un tel écoulement est régi par la loi de DARCY selon laquelle:

$$Q = K \times [A/\mu] \times [\Delta P/L]$$

où Q représente, dans le cas présent, le débit volumique de résine; A la section d'écoulement; $\mu$ la viscosité; et L la longueur d'écoulement.

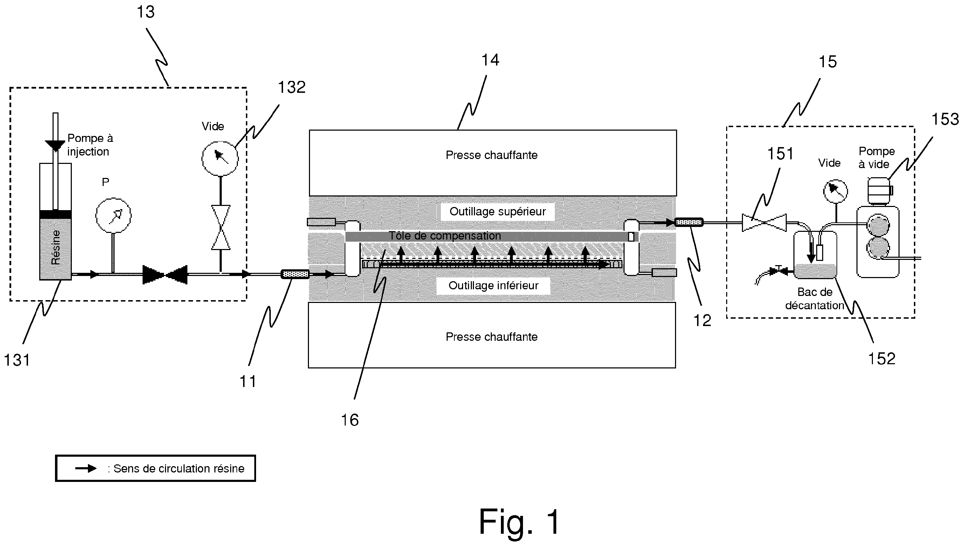

Le schéma de la figure 1 présente un système d'injection classiquement utilisé pour réaliser une telle injection.

Comme on peut le constater sur la figure, un tel système comporte un dispositif 13 de suivi d'injection de résine placé en entrée du moule 13, ainsi qu'un dispositif 15 de suivi de récupération de la résine excédentaire en sortie du moule. Par résine excédentaire on entend ici de la résine n'ayant pas été capturées par la préforme pendant son transit dans le moule, quelle qu'en soit la raison.

Le dispositif d'entrée 13, relié à l'embout 11 monté à l'entrée du moule 14, comporte essentiellement des moyens 131 pour injecter la résine sous une pression contrôlée et des moyens 132 pour réaliser un vide de valeur donnée au niveau du dispositif, la réalisation d'un tel vide ayant notamment pour objet de réaliser l'imprégnation de la préforme fibreuse.

Le dispositif de sortie 15 comporte, quant à lui un circuit d'entrée, relié à l'embout 12 monté à la sortie du moule 14, comportant une vanne d'entrée 151, relié à un bac de décantation 152, ainsi que des moyens pour réaliser le dégazage de la résine récupérée lesdits moyens comportant notamment une pompe à vide 153.

Aucune méthode de quantification efficace du flux de résine en entrée ou en sortie du moule n'est aujourd'hui implantée. La porosité introduite par mauvais dégazage ou fuite n'est pas clairement identifiée.

Dans les systèmes généralement utilisé à ce jour, les paramètres influents qui régissent l'écoulement de la résine et son absorption par la préforme (Débit, pression, température d'injection,...) sont des consignes introduites simplement dans le système qui pilote la pression d'injection de sorte qu'en aval de ce système plus aucune surveillance n'est réalisée.

Ainsi pour les systèmes généralement utilisés à ce jour on constate différentes insuffisances :

- Il n'y a pas de prise en compte des porosités existant dans la résine liquide dont la viscosité est par ailleurs imposée par la température;

- il n'y a pas de prise en compte des effets des canaux d'alimentation en résine en amont et aval qui induisent une variation importante du volume de résine à utiliser, variation difficilement quantifiable et essentiellement variable d'une opération d'injection à une autre;

- l'arrivée de la résine dans la cavité du moule est seulement détectée par la détection d'une variation de pression au niveau du dispositif d'injection;

- Aucune mesure n'est effectuée en sortie de moule 14 autre que la détection visuelle de la présence résine dans les canaux de sortie et au niveau du dispositif de récupération 15.

Par ailleurs, l'implantation d'un simple thermocouple juste avant l'entrée dans le moule ne permet pas de distinguer le front thermique du front d'avancement réel de la résine à l'intérieur du moule, de sorte qu'il existe une réelle incertitude concernant la présence géographique de la résine.

En outre, les capteurs de flux généralement implantés dans le corps du moule détectent bien la présence de résine mais ne donnent aucune information sur son état de dégazage.

En outre également, dans le cadre d'une structure LRI (volume variable), le soulèvement de la caul plate ou la de la membrane du moule n'est évaluée qu'à travers par la variation au cours du temps du rapport volume injecté / théorique (prévision). Cette variation est entachée d'erreurs inhérentes aux paramètres précédents cités.

Pour pallier ces insuffisances on allonge généralement le temps d'injection, ce qui se traduit en pratique par un allongement du pendant lequel on laisse s'écouler de la résine dans le dispositif de récupération. Cet allongement a pour effet de rallonger le temps de l'opération d'imprégnation et d'accroitre la quantité de résine injectée inutilement dans le moule, résine qui se trouve finalement déversée dans le dispositif de récupération.

Il est connu du document US2007/145622 A1 d'implanter des capteurs de type à ultrason dans un moule d'injection de résine mais ces capteurs sont répartis à l'intérieur du moule et ne permettent donc pas de surveiller et d'analyser le flux d'entrée et le flux de sortie de la résine.

C'est aussi le cas du document US2002/155186 A1 où des capteurs sont disposés à l'intérieur du moule.

### PRESENTATION DE L'INVENTION

Un but de l'invention est de proposer un moyen et une méthode permettant de :

- Déterminer avec la meilleure précision possible l'arrivée de la résine dans le moule;
- Contrôler la qualité du dégazage en début d'injection (injection de résine sans bulles);
- Assurer une synchronisation avec les outils de monitoring dédiés au suivi « santé-matière », outils tels que les systèmes d'acquisition de capteurs ultrason dédiés à la détection locale et multiplexée de la saturation de la préforme dont le rôle est de
- Prédire et vérifier la complétude du processus d'injection (sortie de résine identifiée et quantifiée au même titre que l'entrée de résine dans le moule);
- Déterminer en interaction avec les outils de suivi « santé-matière » 'instant où l'opération d'injection peut-être arrêtée et où le lancement de l'opération de polymérisation peut débuter.

A cet effet l'invention a pour objet un dispositif ultrasonore pour caractériser le flux de résine en entrée et en sortie d'un moule à injection lors de la phase d'imprégnation d'une préforme par ladite résine d'une préforme contenue dans ledit moule à injection. Le dispositif comporte deux capteurs ultrasonores disposés respectivement au voisinage de l'orifice d'entrée de la résine dans le moule à injection hors dudit moule et au voisinage de l'orifice de sortie de la résine hors dudit moule. Chaque capteur réalise l'émission d'une onde ultrasonore vers l'extrémité du moule au voisinage de laquelle il est placé et la réception de l'onde ultrasonore réfléchie par le milieu.

Selon une caractéristique de l'invention, les capteurs ultrasonores sont des dispositifs intégrés à la structure des embouts de raccordement permettant le raccordement du moule à injection à un moyen d'injection de résine dans ledit moule et à un moyen de récupération de la résine évacuée du moule.

Selon une autre caractéristique, le dispositif selon l'invention comporte également des moyens pour effectuer l'analyse, temporelle et/ou l'analyse spectrale de l'onde ultrasonore reçue par chacun des capteurs et déterminer la stabilisation du flux de résine traversant le moule.

Dans une forme de réalisation particulière adaptée au cas où le moule à injection comporte des moyens pour assurer à l'intérieur du moule le contrôle santé matière de la pièce formé à partir de la préforme, le dispositif selon l'invention comporte en outre des moyens pour déterminer la complétude de l'étape d'imprégnation de la préforme en combinant les informations fournies par les moyens d'analyse des ondes ultrasonores réfléchies reçues par les capteurs ultrasonores et les informations fournies par les moyens de contrôle santé matière.

L'invention a également pour objet un procédé pour déterminer la complétude de l'opération d'imprégnation d'une préforme par une résine, ladite préforme étant placée dans un moule à injection dans lequel la résine est introduite, ledit procédé mettant en œuvre le dispositif selon l'invention. Le procédé comporte les étapes suivantes:

- une première étape de lancement de l'opération d'injection de résine durant laquelle on réalise une opération d'analyse du flux de résine en entrée du moule;

- une deuxième étape d'initialisation d'un instant $t_{0\_injection}$ de début d'injection;

- une troisième étape de contrôle de l'opération d'injection, cette étape mettant en œuvre une opération de mesure de temps écoulé, $t_{écoulé}$, ce temps d'injection étant compté à partir de l'instant $t_{0\_injection}$ et de comparaison du temps écoulé à une valeur de consigne $t_{injection}$.

L'invention a également pour objet un procédé pour déterminer la complétude de l'opération d'imprégnation d'une préforme par une résine, ladite préforme étant placée dans un moule à injection dans lequel la résine est introduite, ledit procédé mettant en œuvre le dispositif selon l'invention. Le procédé comporte les étapes suivantes:

- une première étape de lancement de l'opération d'injection de résine durant laquelle on réalise une opération d'analyse du flux de résine en entrée du moule;

- une deuxième étape d'initialisation d'un instant $t_{0\_injection}$ de début d'injection;

- une troisième étape de contrôle de l'opération d'injection, cette étape mettant en œuvre une opération d'analyse du flux de résine en sortie du moule, le processus d'injection étant arrêté lorsque que le flux de résine en sortie est stabilisé.

Selon une forme de mise en œuvre particulière du procédé précédent, la troisième étape de contrôle de l'opération d'injection met également en œuvre une opération d'analyse du contrôle santé matière effectué à l'intérieur du moule; le processus d'injection étant arrêté si le flux de résine en sortie du moule est stabilisé et si le contrôle santé matière est positif.

Selon une caractéristique additionnelle du procédé selon l'invention dans sa forme précédente, la troisième étape prend en compte le temps écoulé, de sorte que, si au cours de l'exécution de la troisième étape le contrôle santé matière reste négatif, alors que le flux de résine en sortie du moule est stabilisé depuis au moins un laps de temps donné, le processus d'injection est poursuivi puis arrêté au bout d'un laps de temps limite si malgré l'allongement de l'opération d'injection, l'indicateur santé matière reste négatif.

### DESCRIPTION DES FIGURES

Les caractéristiques et avantages de l'invention seront mieux appréciés grâce à la description qui suit, description qui s'appuie sur les figures annexées qui présentent:

- la figure 1, une illustration schématique présentant un dispositif d'injection classique auquel sont ajoutés les éléments du dispositif selon l'invention;
- les figures 2 et 3, des illustrations relatives à un mode de réalisation préféré des capteurs du dispositif selon l'invention;
- la figure 4, l'organigramme décrivant les étapes essentielles du procédé mettant en œuvre le dispositif selon l'invention, dans une première variante de mise en œuvre;
- la figure 5, l'organigramme décrivant les étapes essentielles du procédé selon l'invention dans une deuxième variante de mise en œuvre;
- la figure 6, l'organigramme décrivant les étapes essentielles du procédé selon l'invention dans une troisième variante de mise en œuvre;
  La figure 7, un diagramme comparatif mettant en évidence le caractère avantageux du dispositif selon l'invention.

Il est à noter que sur les figures jointes au présent texte, un même repère correspond à un même élément fonctionnel ou à une même fonction.

### DESCRIPTION DETAILLEE

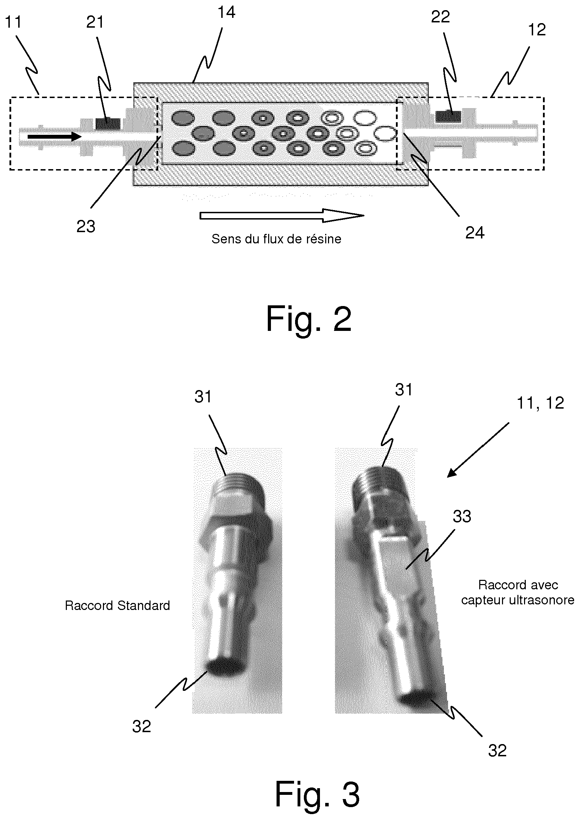

Comme l'illustre la figure 2, le dispositif selon l'invention consiste principalement en deux capteurs ultrasonores 21 et 22, configurés de façon à pouvoir être intégrés à un système réalisant l'injection de résine dans un moule à injection, de façon à imprégner de résine, de façon uniforme en volume, une préforme placée dans ce moule. La figure 2 illustre schématiquement le principe de mise en place du dispositif selon l'invention dans le cadre d'un système d'injection classique, tel que celui illustré par la figure 1, comportant notamment des moyens 13 pour injecter dans un moule rigide 14, au travers d'un orifice d'entrée de la résine sous une température et une pression contrôlées, ainsi que des moyens 15 pour récupérer la résine n'ayant pas été absorbée par la préforme 16, résine qui sort du moule 14 par un orifice de sortie. Le moule 14 est par exemple un moule RTM à volume fixe.

Selon l'invention, les capteurs ultrasonores mis en œuvre sont des éléments piézoélectriques pouvant fonctionner à haute température, typiquement à la température d'injection de la résine. Le principe de fonctionnement de ces capteurs est celui de l'échographie ultrasonore qui repose sur des mesures relatives d'amplitudes (atténuation), des mesures de retard temporel (temps de vol) ainsi que sur une analyse fréquentielle (déphasage), analyse effectuée sur les échos d'une onde acoustique émise, réfléchie par les différentes structures rencontrées au cour de son passage dans l'épaisseur du matériau en cours de réalisation, placé dans le moule.

Selon l'invention également, les capteurs ultrasonores sont disposés le plus près possible des orifices d'entrée et de sortie du moule à injection, de sorte que qu'aucune chute de pression ou de température ne puisse affecter la pertinence des mesures effectuées quant à l'état du flux de résine en entrée et en sortie du moule.

Selon l'invention les capteurs ultrasonores 21 et 22 sont placé le plus près possible des entrée 23 et sortie 24 du moule Dans une forme de réalisation préférée, mais non exclusive, du dispositif selon l'invention, illustrée par les figures 2 et 3, les capteurs ultrasonores 11 et 12 sont respectivement placés dans les embouts de raccordement 11 et 12 qui équipent normalement les orifices d'entrée et de sortie de la résine injectée dans le moule, embouts de raccordement dont la structure apparait modifiée, par rapport à celle d'un embout de raccordement standard, de façon à intégrer un capteur ultrasonore et à en assurer le fonctionnement. Dans la forme de réalisation illustrée par la vue 3b de la figure 3, l'embout présenté comporte, entre l'extrémité 31 destinée à être monté sur l'orifice d'entrée ou de sortie du moule 13 et l'extrémité 32 destinée à être raccordée à un conduit d'alimentation en résine ou de récupération de résine, une cavité aplatie formant extérieurement un méplat 33 dans laquelle est logé le capteur ultrasonore.

Un embout selon l'invention est généralement réalisé en acier. Cependant, il peut également être réalisé en polymère réfractaire, en polyimide chargé de graphite par exemple.

Les embouts en polymère réfractaire favorisent la propagation du signal ultrason émis en raison de la proximité de leurs caractéristiques acoustiques par rapport à celles du matériau sur lequel porte l'événement à quantifier, de la résine époxy notamment. Cependant, ces embouts, bien que réutilisables sont néanmoins soumis à une certaine péremption (usure). Le faible coût de fabrication / équipement est ici un critère de choix du matériau.

Ainsi, l'analyse des échos réfléchis vus du côté de l'orifice d'entrée 23 du moule 13, échos captés par le capteur 21 placé au niveau de l'orifice 23, permet de détecter et de dater les évènements tels que la présence d'un flux de résine à l'entrée du moule 13 et l'absence de porosité (i.e. de bulles de gaz) dans ce flux de résine. Cette datation permet notamment de définir un top de synchronisation déclenchant la mise en marche du système de monitoring chargé de l'évaluation de la santé-matière de l'objet infiltré durant l'opération.

Un tel système de monitoring est par exemple un système constitué, de manière connue, de différents capteurs ultrasonores disposés à l'intérieur du moule à injection, et dont le rôle est de déterminer par échographie si le matériau composite en cours de fabrication au sein du moule ne présente d'anomalie de structure. La demande de brevet français déposé par la demanderesse et publiée sous la référence FR 2995556 décrit notamment un tel système de monitoring "santé matière".

L'analyse des échos réfléchis vus du côté de l'orifice de sortie 24 du moule 13, échos captés par le capteur 22 placé au niveau de l'orifice 24, permet quant à elle de faire une évaluation du volume de résine infiltré (moule de volume fixe et taux volumique de fibres déterminé à en % du volume) ainsi que de sa qualité (dégazage) et de ce fait déterminer le plus exactement possible le top de fin de l'opération d'injection.

Ce top de fin est en outre destiné à être rapproché des informations données par les capteurs constituant le système de monitoring situé en amont au niveau du moule 13, pour déterminer de manière la plus précise possible l'instant où l'on peut considérer que l'imprégnation de la préforme est achevée de façon à stopper l'opération d'imprégnation et à lancer l'opération de polymérisation de la résine imprégnant la préforme.

Outre les deux embouts équipés de capteurs ultrasonores, le dispositif selon l'invention comporte également des moyens d'analyse des signaux transmis par les capteurs, ces moyens réalisent l'analyse des signaux reçus pour déterminer si le flot de résine à l'endroit considéré est un flux stabilisé. Par flux stabilisé, on entend un flux continu de résine sans présence de bulles gazeuses. Comme indiqué précédemment, l'analyse des signaux reçus consiste principalement en une mesure de la variation au cours du temps de l'amplitude de l'écho reçu par le capteur considéré.

La détermination de ces variations d'amplitude permet notamment de déterminer, au niveau de l'entrée du moule, l'instant où la résine commence à traverser l'embout et celui où la résine coule en flux continu (sans bulles) au travers de l'embout (instant $T_0$). De la même façon elle permet de déterminer en sortie du moule l'instant ou de la résine sortant du moule commence à traverser l'embout et l'instant où le flux de résine traversant celui-ci devient continu (imprégnation complète).

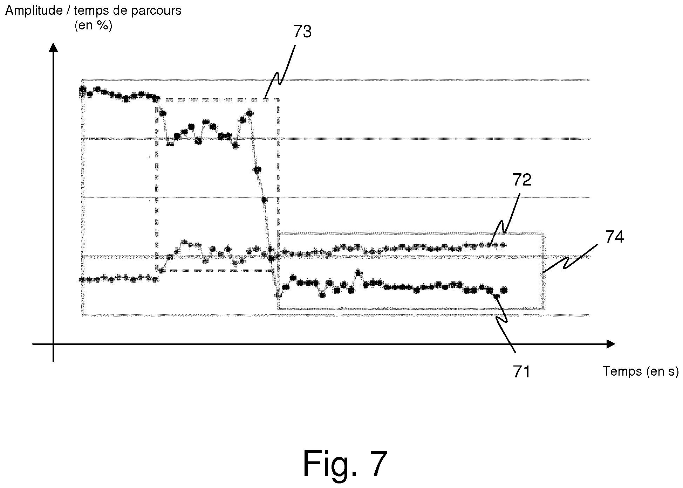

Le principe de détermination de ces instants est illustré par le diagramme de la figure 7, relatif à l'analyse des échos reçus par le capteur 21 placé dans l'embout d'entrée 11; diagramme aisément transposable à l'analyse des échos reçus par le capteur 22 placé dans l'embout de sortie 12.

Sur ce diagramme, la courbe 71 présente la variation, au cours du temps, du temps de parcours des ondes sonores dans l'embout au niveau de l'embout d'entrée 11, pour des instants situés avant et après l'arrivée de résine dans l'embout et la courbe 72 présente la variation au cours du temps de l'amplitude des ondes sonores, pour les mêmes instants situés avant et après l'arrivée de résine dans l'embout.

Pour ces deux courbes, l'arrivée de résine est caractérisée par une brusque inflexion (zone 73 des diagrammes 71 et 72). Après stabilisation d'un flux de résine sans bulles, les deux courbes présentent chacune une valeur d'amplitude ou de temps de propagation sensiblement constante aisément discernable (zone 74 des diagrammes 71 et 72).

Comme on peut le constater sur la figure 7, l'instant de début de remplissage de l'embout d'entrée est facilement identifiable par une variation de l'amplitude du signal correspondant à la courbe 72, tandis que l'instant $T_0$ (flux de résine stabilisé) correspond à l'apparition d'un minimum sur la courbe 71.

D'un point de vue fonctionnel, dans le but de maîtriser de manière optimale le processus d'imprégnation, tant en termes de qualité d'imprégnation (homogénéité, taux de fibres, etc..) qu'en termes de durée d'opération et de quantité de résine utilisée, le dispositif selon l'invention peut être avantageusement mis en œuvre pour réaliser un contrôle fin du processus d'imprégnation de la préforme.

Dans ce but, le dispositif selon l'invention peut être mis en œuvre seul, ou en association avec le système de monitoring interne équipant le moule à injection, système destiné principalement à déterminer la santé matière de la pièce en matériau composite réalisée à l'intérieur du moule. L'état de santé matière est un critère résultant généralement de mesures d'échographie réalisées au moyen de capteurs ultrasonores implantés dans le moule dont les échos sont analysés et les résultats d'analyse comparés à des valeurs de référence, la concordance aux valeurs de référence permettant de déclarer la pièce en bon état de santé.

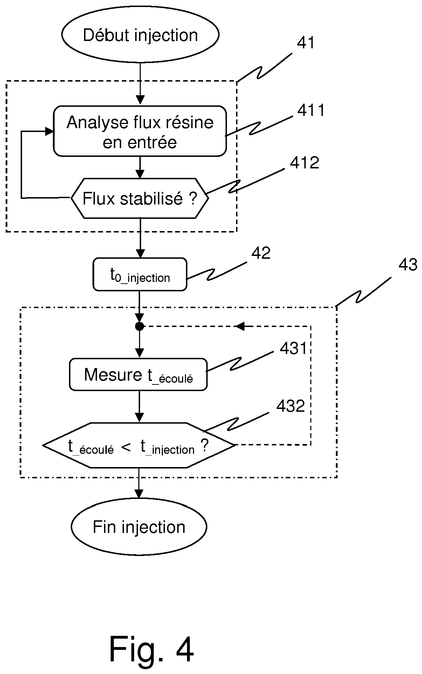

Les figures 4, 5 et 6 décrivent les principales étapes de différentes variantes d'un procédé de contrôle de la complétude d'opérations d'imprégnations mettant en œuvre le dispositif selon l'invention. Ce procédé présenté à titre d'exemple dans différentes variantes ne constitue bien évidemment pas le seul procédé de mise en œuvre du dispositif selon l'invention, la portée du dispositif selon l'invention n'étant pas limité à cet usage.

La figure 4 décrit les principales étapes d'un procédé de contrôle dans une variante simple mettant en œuvre un contrôle de l'apparition d'un écoulement de résine en sortie du moule, contrôle visuel ou optique par exemple, et une mesure de temps, le temps étant ici compté depuis l'instant $T_0$ où l'analyse de l'écho reçu par le capteur 21 du dispositif selon l'invention situé dans l'embout d'entrée 11 indique un flux de résine stabilisé.

Dans cette variante, le procédé de contrôle comporte les étapes suivantes:

- une première étape 41 de lancement de l'opération d'injection de résine durant laquelle on réalise une opération 411 d'analyse du flux de résine en entrée du moule on détermine, 412, à partir des échos reçus par le capteur 21 placé dans l'embout 11 en entrée du moule, si le flux de résine est un flux stabilisé, c'est-à-dire un flux continu;
- une deuxième étape 42 d'initialisation d'un instant $t_{0\_injection}$ de début d'injection cette étape étant réalisée dès que le flux de résine en entrée de moule est considéré comme stabilisé;
- une troisième étape 43 de contrôle de l'opération d'injection. Dans cette variante, la troisième étape consiste simplement, alors que l'injection de résine dans le moule se poursuit, à mettre en œuvre une opération 431 de mesure de temps écoulé, $t_{écoulé}$, ce temps étant compté à partir de l'instant $t_{0\_injection}$, ainsi qu'une comparaison 432 du temps écoulé à une valeur de consigne $t_{injection}$. Par suite lorsque le temps écoulé dépasse la valeur de consigne l'injection de résine est stoppée et le processus d'imprégnation est considéré comme achevé. L'opération de polymérisation de la préforme imprégnée de résine peut alors débuter.

Il est à noter que du fait de la détermination de l'instant de début de comptage est réalisée par le dispositif selon l'invention, on dispose d'une mesure plus précise de la durée réelle de l'injection de résine dans le moule. Usuellement, en l'absence du dispositif selon l'invention, on est généralement contraint de mesurer la durée de l'injection en prenant comme instant de départ l'instant de mise en marche du dispositif 13 d'injection de résine.

Par suite, lorsque le temps d'injection mesuré atteint la valeur de référence $t_{injection}$, on est généralement contraint de laisser l'injection se poursuivre encore pendant un laps de temps donné pour tenir compte de l'écart pouvant exister entre l'instant de début d'injection (mise en marche du dispositif 13) et l'instant réel de début de pénétration de la résine dans le moule. En revanche l'utilisation du dispositif selon l'invention permet de raccourcir sinon d'annuler ce laps de temps. On réalise ainsi une optimisation du temps d'injection et une économie de résine.

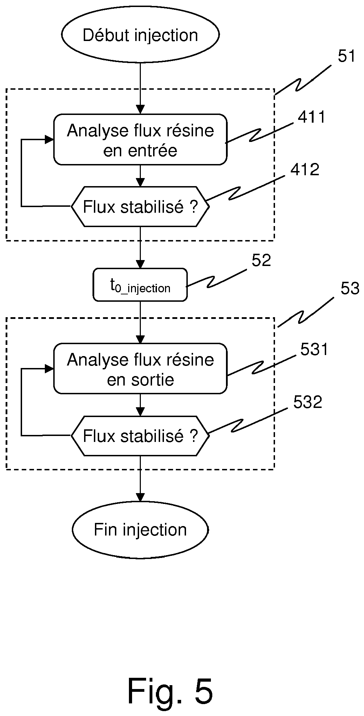

La figure 5 décrit les principales étapes d'un procédé de contrôle dans une variante plus élaborée, basée sur l'analyse des échos reçus par le capteur 21 du dispositif selon l'invention situé dans l'embout d'entrée 11 du moule 14 et par le capteur 22 situé dans l'embout de sortie 12.

Dans cette variante, le procédé de contrôle comporte les étapes suivantes:

- une première étape 51 de lancement de l'opération d'injection de résine, semblable à la première étape 41 de la variante précédente, durant laquelle on réalise une opération 411 d'analyse du flux de résine en entrée du moule, on détermine, 412, à partir des échos reçus par le capteur 21 placé dans l'embout 11 en entrée du moule, si le flux de résine est un flux stabilisé, c'est-à-dire un flux continu;
- une deuxième étape 52 d'initialisation d'un instant $t_{0\_injection}$ de début d'injection cette étape, semblable à la deuxième étape 42 de la variante précédente, étant réalisée dès que le flux de résine en entrée de moule est considéré comme stabilisé. Dans le contexte de cette variante de mise en œuvre cette deuxième étape peut s'avérer optionnelle;
- une troisième étape 53 de contrôle de l'opération d'injection. Dans cette variante, la troisième étape consiste simplement, alors que l'injection de résine dans le moule se poursuit, à mettre en œuvre une opération 531 d'analyse du flux de résine en sortie du moule et à déterminer (opération 532), à partir des échos reçus par le capteur 22 placé dans l'embout 12 en entrée du moule, si le flux de résine est un flux stabilisé, c'est-à-dire un flux continu.

Par suite dès que le flux de résine en sortie de moule est considéré comme stabilisé, l'injection de résine est stoppée et le processus d'imprégnation est considéré comme achevé. L'opération de polymérisation de la préforme imprégnée de résine peut alors débuter.

Il est à noter que, dans cette variante d'implémentation, la détermination d'un événement, autre qu'une mesure temporelle, caractérisant le fait que le flux de résine en sortie du moule est stabilisé permet de mieux garantir que, le moule étant rempli de résine, la préforme logée dans le moule est elle complètement imprégnée de résine. Une telle variante, qui met exploites les informations fournies par les deux capteurs ultrasonores du dispositif selon l'invention, s'avère donc avantageusement appropriée pour assurer la bonne imprégnation d'une préforme destiné à produire une pièce en matériau composite dont la qualité de fabrication présente un degré élevé de criticité.

Sans la mise en œuvre du dispositif selon l'invention l'imprégnation de la préforme pour fabriquer une telle pièce nécessite d'allonger le temps d'injection bien au-delà du temps théorique considéré.

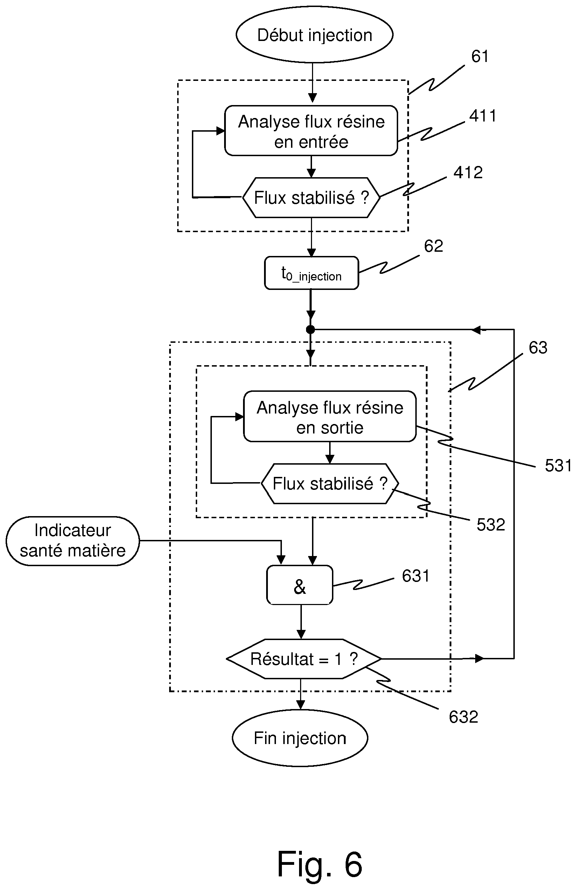

La figure 6 décrit les principales étapes d'un procédé de contrôle dans une variante encore plus élaborée, basée sur l'analyse des échos reçus par le capteur 21 du dispositif selon l'invention situé dans l'embout d'entrée 11 du moule 114 et par le capteur 22 situé dans l'embout de sortie 12; le résultat de cette analyse étant combinée avec les informations de santé matière fournies par le système de monitoring intégré au moule considéré.

Dans cette variante, le procédé de contrôle comporte les étapes suivantes:

- une première étape 61 de lancement de l'opération d'injection de résine, semblable à la première étape 41 de la variante précédente, durant laquelle on réalise une opération 411 d'analyse du flux de résine en entrée du moule, on détermine, 412, à partir des échos reçus par le capteur 21 placé dans l'embout 11 en entrée du moule, si le flux de résine est un flux stabilisé, c'est-à-dire un flux continu;
- une deuxième étape 62 d'initialisation d'un instant $t_{0\_injection}$ de début d'injection cette étape, semblable à la deuxième étape 42 de la variante précédente, étant réalisée dès que le flux de résine en entrée de moule est considéré comme stabilisé. Dans le contexte de cette variante de mise en œuvre cette deuxième étape peut s'avérer optionnelle;
- une troisième étape 53 de contrôle de l'opération d'injection. Dans cette variante, la troisième étape consiste, alors que l'injection de résine dans le moule se poursuit, à mettre en œuvre une opération 531 d'analyse du flux de résine en sortie du moule, et à déterminer (opération 532), à partir des échos reçus par le capteur 22 placé dans l'embout 12 en sortie du moule, si le flux de résine est un flux stabilisé, c'est-à-dire un flux continu.

Elle consiste également dans un même temps à collecter auprès du système de monitoring santé matière intégré au moule la ou les informations permettant de déterminer si la structure de la pièce contenue dans le moule est conforme à l'attendu.

Elle consiste encore à effectuer la fusion 631 des informations relatives à la stabilisation du flux de résine en sortie du moule, obtenue par l'opération 432, et à la bonne santé matière de la pièce.

Par suite, si les deux conditions "flux stabilisé" et "santé matière conforme" sont réunies (opération 632), l'injection de résine est stoppée et le processus d'imprégnation est considéré comme achevé. L'opération de polymérisation de la préforme imprégnée de résine peut alors débuter.

Il est à noter que l'information de santé matière délivrée par le système de monitoring intégré au moule peut prendre diverses formes qu'il convient donc de considérer et de traiter de façon à disposer préférentiellement d'un indicateur simple, de forme "go-nogo" ou "0/1" par exemple, facilement exploitable dans le cadre du procédé décrit ici, comme l'illustre la figure 6. La synthèse d'un tel indicateur peut selon les cas être réalisée soit par le système en charge du monitoring santé matière, soit par les moyens d'analyse du dispositif selon l'invention lui-même.

Il est à noter également que cette variante d'implémentation constitue une variante élaborée de la variante précédente illustrée, par la figure 5. Cette variante permet de prendre en compte des informations complémentaires, utile notamment pour déterminer le bien fondé de la poursuite de l'opération d'injection dans certaines circonstances particulières.

C'est en particulier le cas si le système de monitoring santé matière détecte une zone de la préforme dans laquelle la résine ne parvient pas à pénétrer. Dans une telle circonstance, l'indicateur santé matière prendra de manière permanente un état "no-go" ou "0" indiquant une anomalie de structure de la pièce.

Par suite, bien que le flux de résine apparaisse stabilisé, l'opération d'injection sera poursuivie jusqu'à ce que la zone considérée étant finalement imprégnée, l'indicateur santé matière prenne un état "go" ou "1" entrainant l'arrêt de l'opération d'injection. Si malgré l'allongement de l'opération d'injection la zone considérée reste non imprégnée, l'indicateur santé matière reste alors dans un état "no-go" ou "0" qui peut conduire à l'arrêt de l'opération d'injection au bout d'un laps de temps limite, déterminé par ailleurs.

Bien que les éléments de description qui précèdent prennent appui sur un exemple d'application concernant un procédé RTM impliquant un moule à volume fixe, le dispositif selon l'invention tel qu'il vient d'être écrit peut avantageusement être utilisé avec différents systèmes d'injection de préformes textiles sèches, de type RTM et LRI; aussi bien à chaud pour des applications industrielles usuelles, qu'à température ambiante, come dans le cadre de bancs de perméabilité. Les caractéristiques fonctionnelles du dispositif selon l'invention n'en sont cependant pas modifiées pour autant.

Néanmoins des variantes de mise en place du dispositif sur un moule peuvent être induites par la nature du moule ou son principe de fonctionnement, ces variantes pouvant induire des modifications / adaptation des embouts d'injection.

• C'est en particulier le cas lors de la mise en place du dispositif selon l'invention sur un moule à volume variable, tel que les moules pour injection LRI. Dans un tel contexte l'orifice de sortie de la résine peut par exemple être confondu avec l'orifice de tirage à vide et l'embout de sortie constituant le dispositif être placé sur cet orifice.

Ainsi, l'implantation des capteurs peut être réalisée de façon à les faire fonctionner en mode Emission / réception ou en mode transmission

De même les embouts peuvent être aménagés en termes de définition aussi bien en ce qui concerne le matériau utilisé: en métal de manière standard ou encore en polymère réfractaire (plus cher), qu'en ce qui concerne la présence de zones usinées ou modifiées spécifiquement pour favoriser la propagation d'ondes longitudinale ou transversales, ou en ce qui concerne une optimisation de structure liée à la configuration de l'outillage d'injection utilisé (injection en point multiple par exemple).

Par ailleurs l'implantation du capteur ultrasonore dans l'embout peut présenter diverses spécificités. Ainsi:

- la connectique associée aux capteurs peut être conçue démontable et réutilisable (dispositif d'encapsulage);
- L'implantation peut être de nature diverse et consister en une implantation sans contact avec le fluide d'injection, le corps de l'embout faisant office de relai pour les ondes sonores ou en une implantation avec contact direct avec le fluide d'injection le montage du capteur se faisant par perçage et immobilisation dans l'embout.

L'élément sensible, le capteur, peut encore être rapporté sur une plage usinée et fixé par collage.

L'élément sensible peut encore consister en un dépôt de matériau par pulvérisation, le matériau étant cuit sur l'embout (piezo-pulvérisation).

## Revendications

1. Système d'injection comportant un dispositif ultrasonore pour caractériser le flux de résine en entrée et en sortie d'un moule à injection (14) lors de la phase d'imprégnation par ladite résine d'une préforme (16) contenue dans ledit moule à injection, **caractérisé en ce qu'**il comporte deux capteurs ultrasonores (21, 22) disposés respectivement au voisinage de l'orifice d'entrée (23) de la résine dans le moule à injection (14), hors dudit moule, et au voisinage de l'orifice de sortie (24) de la résine, hors dudit moule, chaque capteur réalisant l'émission d'une onde ultrasonore vers l'extrémité du moule au voisinage de laquelle il est placé et la réception de l'onde ultrasonore réfléchie par le milieu.

2. Système d'injection selon la revendication 1, **caractérisé en ce que** lesdits capteurs ultrasonores (21, 22) sont des dispositifs intégrés à la structure des embouts (11, 12) de raccordement du moule à injection (14) à un moyen (13) d'injection de résine dans ledit moule (14) et de récupération (15) de la résine évacuée hors du moule (14).

3. Système d'injection selon l'une des revendications 1 ou 2, **caractérisé en ce qu'**il comporte également des moyens pour effectuer l'analyse, temporelle et/ou l'analyse spectrale de l'onde ultrasonore reçue par chacun des capteurs (21, 22) et déterminer la stabilisation du flux de résine traversant le moule (14).

4. Système d'injection selon la revendication 3, **caractérisé en ce que**, le moule à injection (14) comportant des moyens pour assurer à l'intérieur du moule le contrôle santé matière de la pièce formé à partir de la préforme (16), il comporte en outre des moyens pour déterminer la complétude de l'étape d'imprégnation de la préforme (16) en combinant les informations fournies par les moyens d'analyse des ondes ultrasonores réfléchies reçues par les capteurs ultrasonores (21, 22) et les informations fournies par les moyens de contrôle santé matière.

5. Procédé pour déterminer la complétude de l'opération d'imprégnation d'une préforme (16) par une résine, ladite préforme étant placée dans un moule à injection (14) dans lequel la résine est introduite, ledit procédé mettant en œuvre le système d'injection selon l'une quelconque des revendications 1 à 4, **caractérisé en ce qu'**il comporte les étapes suivantes:

    une première étape (41) de lancement de l'opération d'injection de résine durant laquelle on réalise une opération d'analyse du flux de résine en entrée du moule (14); une deuxième étape (42) d'initialisation d'un instant $t_{0\_injection}$ de début d'injection;
    une troisième étape (43) de contrôle de l'opération d'injection, cette étape mettant en œuvre une opération de mesure de temps écoulé, $t_{écoulé}$, ce temps d'injection étant compté à partir de l'instant $t_{0\_injection}$ et de comparaison du temps écoulé à une valeur de consigne $t_{injection}$.

6. Procédé pour déterminer la complétude de l'opération d'imprégnation d'une préforme (16) par une résine, ladite préforme étant placée dans un moule à injection (14) dans lequel la résine est introduite, ledit procédé mettant en œuvre le système d'injection selon l'une quelconque des revendications 1 à 4, **caractérisé en ce qu'**il comporte les étapes suivantes:

    une première étape (51) de lancement de l'opération d'injection de résine durant laquelle on réalise une opération d'analyse du flux de résine en entrée du moule (14);
    une deuxième étape (52) d'initialisation d'un instant $t_{0\_injection}$ de début d'injection;
    une troisième étape (53) de contrôle de l'opération d'injection, cette étape mettant en œuvre une opération d'analyse du flux de résine en sortie du moule (14), le processus d'injection étant arrêté lorsque que le flux de résine en sortie est stabilisé.

7. Procédé selon la revendication 6, **caractérisé en outre en ce que** la troisième étape (53) de contrôle de l'opération d'injection met également en œuvre une opération d'analyse du contrôle santé matière effectué à l'intérieur du moule (14); le processus d'injection étant arrêté si le flux de résine en sortie du moule est stabilisé et si le contrôle santé matière est positif.

8. Procédé selon la revendication 7, **caractérisé en outre en ce que** si, au cours de l'exécution de la troisième étape (53) le contrôle santé matière reste négatif alors que le flux de résine en sortie du moule (14) est stabilisé depuis au moins un laps de temps donné, le processus d'injection est poursuivi puis arrêté au bout d'un laps de temps limite si, malgré l'allongement de l'opération d'injection, l'indicateur santé matière reste négatif.

**Patentansprüche**

1. Einspritzsystem aufweisend eine Ultraschallvorrichtung zur Charakterisierung des Harzflusses am Ein- und Ausgang einer Spritzform (14) bei der Phase einer Imprägnierung, durch das Harz, eines Vorformlings (16), der in der Spritzform enthalten ist, **dadurch gekennzeichnet, dass** es zwei Ultraschallsensoren (21, 22) aufweist, die jeweils in der Nähe der Öffnung zum Eintritt (23) des Harzes in die Spritzform (14) außerhalb der Form und in der Nähe der Öffnung zum Austritt (24) des Harzes aus der Form angeordnet sind, wobei jeder Sensor die Aussendung einer Ultraschallwelle zu dem Ende der Form, in dessen Nähe er platziert ist, und den Empfang der Ultraschallwelle, die durch das Umgebungsmilieu reflektiert wird, durchführt.

2. Einspritzsystem nach Anspruch 1, **dadurch gekennzeichnet, dass** die Ultraschallsensoren (21, 22) Vorrichtungen sind, die in die Struktur der Stutzen (11, 12) zum Anschluss der Spritzform (14) an ein Mittel (13) zum Einspritzen von Harz in die Form (14) und zur Rückgewinnung (15) des aus der Form (14) abgeführten Harzes integriert sind.

3. Einspritzsystem nach einem der Ansprüche 1 oder 2, **dadurch gekennzeichnet, dass** es ebenfalls Mittel enthält, um die zeitliche Analyse und/oder Spektralanalyse der Ultraschallwelle durchzuführen, die von jedem der Sensoren (21, 22) empfangen wurde, und die Stabilisierung des Harzflusses zu bestimmen, der die Form (14) durchquert.

4. Einspritzsystem nach Anspruch 3, **dadurch gekennzeichnet, dass**, die Spritzform (14) aufweisend Mittel zur Sicherstellung, im Inneren der Form, der Kontrolle des Materialzustands des Teils, das anhand des Vorformlings (16) gebildet wird, es ferner Mittel aufweist, um die Vollständigkeit des Schritts der Imprägnierung des Vorformlings (16) durch Kombination der Informationen, die durch die Mittel zur Analyse der reflektierten Ultraschallwellen bereitgestellt werden, die von den Ultraschallsensoren (21, 22) empfangen werden, und der Informationen, die durch die Mittel zur Kontrolle des Materialzustands bereitgestellt werden, zu bestimmen.

5. Verfahren zur Bestimmung der Vollständigkeit des Vorgangs des Imprägnierens eines Vorformlings (16) mit einem Harz, wobei der Vorformling in eine Spritzform (14) eingelegt wird, in welche das Harz eingeleitet wird, wobei das Verfahren das Einspritzsystem nach einem der Ansprüche 1 bis 4 einsetzt, **dadurch gekennzeichnet, dass** es die folgenden Schritte umfasst:

einen ersten Schritt (41) des Starts des Harzeinspritzvorgangs, während welchem ein Vorgang der Analyse des Harzflusses am Eingang der Form (14) durchgeführt wird;
einen zweiten Schritt (42) des Initialisierens eines Zeitpunkts $t_{0\_Einspritzen}$ des Einspritzbeginns;
einen dritten Schritt (43) des Steuerns des Einspritzvorgangs, wobei dieser Schritt einen Vorgang des Messens verstrichener Zeit, $t_{verstrichen}$, wobei diese Einspritzzeit ab dem Zeitpunkt $t_{0\_Einspritzen}$ gezählt wird, und des Vergleichens der verstrichenen Zeit mit einem Vorgabewert $t_{Einspritzen}$ durchführt.

6. Verfahren zur Bestimmung der Vollständigkeit des Vorgangs des Imprägnierens eines Vorformlings (16) mit einem Harz, wobei der Vorformling in eine Spritzform (14) eingelegt wird, in welche das Harz eingeleitet wird, wobei das Verfahren das Einspritzsystem nach einem der Ansprüche 1 bis 4 einsetzt, **dadurch gekennzeichnet, dass** es die folgenden Schritte umfasst:

einen ersten Schritt (51) des Starts des Harzeinspritzvorgangs, während welchem ein Vorgang der Analyse des Harzflusses am Eingang der Form (14) durchgeführt wird;
einen zweiten Schritt (52) des Initialisierens eines Zeitpunkts $t_{0\_Einspritzen}$ des Einspritzbeginns;
einen dritten Schritt (53) des Steuerns des Einspritzvorgangs, wobei dieser Schritt einen Vorgang des Analysierens des Harzflusses am Ausgang der Form (14) durchführt, wobei der Einspritzprozess angehalten wird, wenn der Harzfluss am Ausgang stabilisiert ist.

7. Verfahren nach Anspruch 6, ferner **dadurch gekennzeichnet ist, dass** der dritte Schritt (53) des Steuerns des Einspritzvorgangs ebenfalls einen Vorgang des Analysierens der Kontrolle des Materialzustands durchführt, der im Inneren der Form (14) vorgenommen wird; wobei der Einspritzprozess angehalten wird, wenn der Harzfluss am Ausgang der Form stabilisiert ist und wenn die Kontrolle des Materialzustands positiv ist.

8. Verfahren nach Anspruch 7, ferner **dadurch gekennzeichnet ist, dass**, wenn während der Ausführung des dritten Schritts (53) die Kontrolle des Materialzustands negativ bleibt, während der Harzfluss am Ausgang der Form (14) seit wenigstens einer bestimmten Zeitspanne stabilisiert ist, der Einspritzprozess fortgesetzt wird, dann am Ende einer begrenzten Zeitspanne angehalten wird, wenn trotz der Verlängerung des Einspritzvorgangs der Materialzustandsindikator negativ bleibt.

**Claims**

1. Injection system comprising an ultrasound device for characterizing the flow of resin entering and leaving an injection mold (14) during the phase of impregnation by said resin of a preform (16) contained in said injection mold, **characterized in that** it includes two ultrasound sensors (21, 22) arranged respectively in the vicinity of the inlet port (23) where the resin enters the injection mold (14), outside said mold, and in the vicinity of the outlet port (24) where the resin leaves said mold, each sensor emitting an ultrasound wave towards the end of the mold in the vicinity of which it is positioned and receiving the ultrasound wave reflected by the medium.

2. Injection system according to Claim 1, **characterized in that** said ultrasound sensors (21, 22) are devices integrated into the structure of the fittings (11, 12) for connecting the injection mold (14) to means (13) for injecting resin into said mold (14) and means (15) for recovering resin evacuated from the mold (14).

3. Injection system according to either one of Claims 1 and 2, **characterized in that** it also includes means for effecting the temporal analysis and/or the spectral analysis of the ultrasound wave received by each of the sensors (21, 22) and determining the stabilization of the flow of resin through the mold (14).

4. Injection system according to Claim 3, **characterized in that**, the injection mold (14) including means for monitoring inside the mold the material health of the part formed from the preform (16), it further includes means for determining the completeness of the step of impregnating the preform (16) by combining the information supplied by the means for analyzing the reflected ultrasound waves received by the ultrasound sensors (21, 22) and the information supplied by the material health monitoring means.

5. Method for determining the completeness of the operation of impregnating a preform (16) with a resin, said preform being positioned in an injection mold (14) into which the resin is introduced, said method employing the injection system according to any one of Claims 1 to 4, **characterized in that** it includes the following steps:

a first step (41) of launching the operation of injecting resin during which an operation of analyzing the flow of resin entering the mold (14) is carried out;
a second step (42) of initializing an injection start time $t_{0\_injection}$;
a third step (43) of monitoring the injection operation, this step employing an operation of measuring the elapsed time $t_{elapsed}$, this injection time being counted from the time $t_{0\_injection}$ and by comparing the elapsed time to a set point value $t_{injection}$.

6. Method for determining the completeness of the operation of impregnating a preform (16) with a resin, said preform being positioned in an injection mold (14) into which the resin is introduced, said method employing the injection system according to any one of Claims 1 to 4, **characterized in that** it includes the following steps:

a first step (51) of launching the operation of injecting resin during which an operation of analyzing the flow of resin entering the mold (14) is carried out;
a second step (52) of initializing an injection start time $t_{0\_injection}$;
a third step (53) of monitoring the injection operation, this step employing an operation of analyzing the flow of resin leaving the mold (14), the injection process being stopped when the exit flow of resin is stabilized.

7. Method according to Claim 6, further **characterized in that** the third step (53) of monitoring the injection operation also employs an operation of analyzing the material health check effected inside the mold (14), the injection process being stopped if the flow of resin leaving the mold is stabilized and if the material health check is positive.

8. Method according to Claim 7, further **characterized in that** if, during the execution of the third step (53) the material health check remains negative while the flow of resin leaving the mold (14) has stabilized since at least a given time lapse, the injection process is continued and then stopped at the end of a limit time lapse if, despite the lengthening of the injection operation, the material health indicator remains negative.

Fig. 1

11  21  14  22  12

23

Sens du flux de résine

24

# Fig. 2

31  31  11, 12

33

Raccord Standard

Raccord avec
capteur ultrasonore

32

32

# Fig. 3

Début injection

41

Analyse flux résine
en entrée

411

Flux stabilisé ?

412

$t_{0\_injection}$

42

43

Mesure $t_{\_écoulé}$

431

$t_{\_écoulé} < t_{\_injection}$ ?

432

Fin injection

# Fig. 4

Début injection

51

Analyse flux résine
en entrée                    411

Flux stabilisé ?             412

$t_{0\_injection}$           52

53

Analyse flux résine
en sortie                    531

Flux stabilisé ?             532

Fin injection

Fig. 5

Fig. 6

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007145622 A1
- US 2007145622 A1
- US 2002155186 A1
- FR 2995556